# EUROPÄISCHE PATENTANMELDUNG

(11) **EP 2 458 304 A2**
(43) Veröffentlichungstag der Anmeldung: **30.05.2012**
(21) Anmeldenummer: 11190162.5
(22) Anmeldetag: 22.11.2011
(51) Int. Cl.: F25B 25/00, F25B 30/06, F25B 13/00, F25B 49/02

(54) **Wärmepumpenanlage umfassend eine Wärmepumpe sowie Verfahren zum Betrieb einer derartigen Wärmepumpenanlage**

(30) Priorität: 24.11.2010 DE 102010052203
(71) Anmelder: Glen Dimplex Deutschland GmbH, 95326 Kulmbach (DE)
(72) Erfinder: Shirkhani, Ghanbar, 95119 Naila (DE); Fix, Hartmut, 03096 Burg (DE)
(74) Vertreter: FDST Patentanwälte

(57) **Zusammenfassung**

Um die Energieeffizienz einer Wärmepumpenanlage (24) zu verbessern ist in einen Kreislauf (10) einer Wärmepumpe (1) neben einem als Verdampfer ausgeführten ersten Wärmetauscher (2) ein zweiter Wärmetauscher (12) zur zusätzlichen Erwärmung des Kältemittels K angeordnet. Dieser zusätzliche Wärmetauscher (12) wird von einem zweiten Wärmeträgermedium (M2) gespeist, welches insbesondere aus einer regenerativen Wärmequelle, beispielsweise einer Solaranlage (30) stammt.

## Beschreibung

Die Erfindung betrifft eine Wärmepumpenanlage mit den Merkmalen des Oberbegriffs des Anspruchs 1 sowie ein Verfahren zum Betrieb einer derartigen Wärmepumpenanlage.

Eine derartige Wärmepumpenanlage wird üblicherweise zum Erzeugen von thermischer Energie, nachfolgend kurz als Wärme bezeichnet, für einen Verbraucher herangezogen. Die Wärmepumpe umfasst hierzu üblicherweise einen Kältemittelkreislauf, in den ein Verdampfer, ein Verdichter, ein Verflüssiger sowie eine Drossel geschaltet sind. Verdampfer und Verflüssiger bilden Wärmetauscher, wobei über den Verdampfer Wärme aus einem ersten Wärmeträgermedium, wie beispielsweise Umgebungsluft, durch Erdwärme erwärmte Sole oder Wasser aufgenommen wird. Über den Verflüssiger wird Wärme verbraucherseitig abgegeben, insbesondere beispielsweise an einen Verbraucherkreislauf zur Erwärmung von Brauch- und/oder Heizungswasser.

Derartige Wärmepumpen werden vermehrt für die Versorgung von Wohnräumen mit Wärme eingesetzt, insbesondere auch für Ein- und Mehrfamilienhäuser.

Aus Energieeinspargründen werden derartige Anlagen teilweise durch zusätzliche Solaranlagen unterstützt, die zum direkten Wärmeeintrag in die Verbraucherseite vorgesehen sind. Hierzu wird üblicherweise in Solarkollektoren ein zweites Wärmeträgermedium, insbesondere eine Flüssigkeit, beispielsweise mit Zusätzen versehenes Wasser, erhitzt und zur Erwärmung des verbraucherseitigen Brauch- und/oder Heizungswassers herangezogen.

Auf der Verbraucherseite ist üblicherweise ein Energiespeicher, typischerweise ein mit Wasser gefüllter Pufferspeicher, vorgesehen, in den in der Regel mittels eines weiteren Wärmetauschers die solar erzeugte Wärme eingebracht wird.

Der Erfindung liegt die Aufgabe zugrunde, die Effizienz einer derartigen Wärmepumpenanlage zu verbessern.

Erfindungsgemäß wird diese Aufgabe durch eine Vorrichtung mit den Merkmalen des Anspruchs 1 sowie durch ein Verfahren mit den Merkmalen des Anspruchs 11 gelöst.

Danach ist vorgesehen, dass im Kältemittelkreislauf zusätzlich zu dem Verdampfer, der einen ersten Wärmetauscher bildet, ein zweiter Wärmetauscher zur zusätzlichen Erwärmung des Kältemittels vorgesehen ist. Dieser zweite Wärmetauscher wird dabei mittels eines zweiten Wärmeträgermediums gespeist.

Dieses ist vorzugsweise eine Flüssigkeit, insbesondere Wasser/Sole, und wird insbesondere in einem weiteren Kreislauf geführt.

Die Energiequelle für das zweite Wärmeträgermedium ist hierbei insbesondere eine regenerative Energiequelle, vorzugsweise Solarwärme. D.h. das zweite Wärmeträgermedium wird über Solarkollektoren einer Solaranlage erwärmt. Alternativ zur Solarwärme kann das zweite Wärmeträgermedium auch über Erdwärme oder Abwärme als Wärmequellen erwärmt werden. Die Abwärme wird beispielsweise aus Entlüftungsanlagen gewonnen. Grundsätzlich kann das zweite Wärmeträgermedium auch gasförmig sein.

Diese Ausgestaltung der zusätzlichen Einbindung eines zweiten Wärmetauschers in den Primärkreislauf (Kältemittelkreislauf) der Wärmepumpe beruht auf der Überlegung, dass bei heute genutzten Anlagen beispielsweise solarerzeugte Wärme ungenutzt bleibt, falls der (solare) Energieertrag zu gering ist, d.h. die Temperatur des zweiten Wärmeträgermediums ist beispielsweise zu gering, um das verbraucherseitige Wasser zusätzlich erwärmen zu können. Ausgehend hiervon beruht die Erfindung auf der Überlegung, diese "minderwertige Wärme" zur Effizienzsteigerung der gesamten Anlage gewinnbringend einzusetzen, indem mit Hilfe dieser verbleibenden Energie eine zusätzliche Erwärmung des Kältemittels des Kältekreislaufs der Wärmepumpe vorgenommen wird.

Durch das Einspeisen dieser (solaren) Wärme in den Primärkreislauf wird damit eine Erhöhung der Verdampfungstemperatur erreicht, also eine Erhöhung der Temperatur des Kältemittels. Dies führt zu einer Effizienzsteigerung der Wärmepumpe.

In bevorzugter Ausgestaltung werden die beiden Wärmeträgermedien durch unterschiedliche regenerative Wärmequellen, beispielsweise Solarenergie und Erdwärme erwärmt. Der erste Wärmetauscher wird dabei beispielsweise mit dem über die Erdwärme erwärmten ersten Wärmeträgermedium gespeist und der zweite Wärmetauscher über das solarerwärmte zweite Wärmeträgermedium. Anstelle der Erdwärme kann auch die (Umgebungs-) Luft als regenerative Energiequelle herangezogen werden. Als Wärmeträgermedium ist auch Wasser, beispielsweise zur Nutzung von Restwärme von Abwasser möglich. Allgemein kann Rest- oder Abwärme für den ersten und insbesondere für den zweiten Wärmetauscher herangezogen werden.

Der zweite Wärmetauscher kann hierbei - in Strömungsrichtung des Kältemittels im normalen Wärmepumpenbetrieb betrachtet - sowohl vor als auch nach dem eigentlichen Verdampfer der Wärmepumpe in den Kreislauf geschaltet werden. Bevorzugt ist er in Strömungsrichtung nach dem ersten Wärmetauscher in den Kreislauf geschaltet. In einem Abtaubetrieb, bei dem das Kältemittel im Vergleich zum Grundmodus in entgegengesetzter Richtung strömt, ist der zweite Wärmetauscher vor dem ersten, abzutauenden Wärmetauscher angeordnet.

Gemäß einer bevorzugten Weiterbildung ist vorgesehen, dass das zweite Wärmeträgermedium in einem nachfolgend als Heizmodus bezeichneten Betriebsmodus direkt dem Verbraucher, insbesondere einem Warmwasserspeicher zuführbar ist. Die gesamte Anlage kombiniert daher zwei Wärmeerzeugungseinheiten für den Verbraucher, nämlich einerseits die Wärmepumpe und andererseits eine zusätzliche Wärmeerzeugungsanlage, wie beispielsweise Solaranlage. Vorzugsweise erfolgt dabei ein Umschalten von einem Grundmodus in den Heizmodus, d.h. die Wärmepumpe wird abgeschaltet und zur Erwärmung der Verbraucherseite wird ausschließlich die zusätzliche Wärmeerzeugungsanlage herangezogen. Alternativ hierzu ist ein Zuschalten des Heizmodus vorgesehen, insbesondere dann, wenn die zusätzliche Wärmeerzeugungsanlage den verbraucherseitigen Wärmebedarf nicht vollständig decken kann. In diesem Fall wird daher die Wärmepumpe weiterbetrieben und das zweite Wärmeträgermedium wird sowohl für die Erwärmung des Kältemittels als auch für die direkte Erwärmung des Verbrauchers vorgesehen.

Über eine Steuereinrichtung wird die Wärmepumpenanlage in Abhängigkeit der aktuell herrschenden Umgebungsbedingungen und der jeweiligen Anforderungen gesteuert. Die Umgebungsbedingungen sind dabei insbesondere die Temperaturen der Wärmeträgermedien sowie die Temperatur des verbraucherseitigen Wassers. In bevorzugter Ausgestaltung ist daher vorgesehen, dass die Steuereinrichtung in Abhängigkeit der Temperatur des zweiten Wärmeträgermediums sowie in Abhängigkeit der Temperatur des Verbrauchers in den Heizmodus umschaltet bzw. den Heizmodus zuschaltet, um die über das zweite Wärmeträgermedium bereitgestellte Wärme zur direkten Erwärmung des Verbrauchers heranzuziehen. Wenn die Temperatur des zweiten Wärmeträgermediums zu gering für eine weitere direkte Erwärmung des Verbrauchers ist, schaltet die Steuereinrichtung in den Grundmodus, in dem der zweite Wärmetauscher mit dem zweiten Wärmeträgermedium zur ergänzenden Erwärmung des Kältemittels beaufschlagt wird. Durch das Umschalten in den Grundmodus wird die Wärme des zweiten Wärmeträgermediums weiter genutzt.

Gemäß einer bevorzugten Weiterbildung ist ein Betrieb in einem sogenannten Solarmodus vorgesehen, bei dem lediglich der zweite Wärmetauscher aktiviert ist, also mit dem zweiten Wärmeträgermedium beaufschlagt ist. Der erste Wärmetauscher ist abgeschaltet. Der zweite Wärmetauscher wird in diesem Betriebsmodus daher als (alleiniger) Verdampfer für das Kältemittel verwendet. Dies erfolgt insbesondere dann, wenn über das zweite Wärmeträgermedium ausreichend Wärme zur Verfügung gestellt wird und / oder die Temperatur des zweiten Wärmeträgermediums höher ist als die des ersten Wärmeträgermediums.

Ein weiterer besonderer Vorteil ist darin zu sehen, dass über diesen zusätzlichen Wärmeeintrag ein Abtauvorgang für den Verdampfer unterstützt oder vorgenommen werden kann. Der zusätzliche Wärmeeintrag führt beispielsweise bei einem Abtauzyklus, bei dem das Kältemittel in entgegengesetzter Strömungsrichtung durch den Verdampfer (erster Wärmetauscher) geführt wird, zu einer verringerten Abtauzeit und/oder zu einer geringeren Anzahl an Abtauzyklen, wodurch ebenfalls die Effizienz der Gesamtanlage erhöht wird. Ein Abtauvorgang ist üblicherweise bei einem Luft-Kältemittel-Wärmetauscher erforderlich, bei dem der Luft durch den Verdampfer (erster Wärmetauscher) Wärme entzogen wird. Unter gewissen Umständen schlägt sich die Luftfeuchtigkeit auf den Verdampferflächen des ersten Wärmetauschers als Eis nieder. Dies führt zu einem verschlechterten Wärmeübergang.

In zweckdienlicher Ausgestaltung ist hierbei vorgesehen, dass - insbesondere alternativ zu einem Abtauzyklus mit Umkehr der Strömungsrichtung - in einem Abtaumodus der erste Wärmetauscher (Verdampfer) mit dem zweiten Wärmeträgermedium direkt beaufschlagt wird. Die Verdampferflächen werden daher durch die Zuführung des zweiten Wärmeträgermediums effektiv abgetaut.

Zur direkten Beaufschlagung des ersten Wärmetauschers mit dem zweiten Heizmedium ist der erste Wärmetauscher vorzugsweise als 3-Medien Wärmetauscher und damit zum Anschluss an zumindest zwei Kreisläufe ausgebildet, nämlich einerseits den Kältemittelkreislauf und andererseits an den Kreislauf des zweiten Wärmeträgermediums. Die beiden Medien werden dabei in getrennten Teilräumen im ersten Wärmetauscher geführt.

Vorzugsweise werden über die Steuereinrichtung in Abhängigkeit der aktuellen Betriebsparameter, nämlich Temperatur und/oder Energieinhalt der beiden Wärmeträgermedien sowie beispielsweise Umgebungstemperatur und in Abhängigkeit der verbraucherseitigen Anforderungen, unterschiedliche Betriebsmodi eingestellt.

Im Grundmodus ist ein gleichzeitiger Betrieb der beiden Wärmetauscher vorgesehen, d.h. beide Wärmetauscher werden jeweils von dem jeweiligen Wärmeträgermedium durchströmt und das zweite Wärmeträgermedium dient zur zusätzlichen Erwärmung des Kältemittels. Für den Fall, dass über das zweite Wärmeträgermedium ausreichend Wärme bei einer geeigneten Temperatur zur Verfügung gestellt wird, wird in einen sogenannten Regenerativ- oder Solarmodus umgeschaltet, bei dem bevorzugt lediglich der zweite Wärmetauscher aktiv ist. Umgekehrt, wenn über den zweiten Wärmetauscher kein geeigneter Wärmeeintrag, beispielsweise durch fehlende Sonneneinstrahlung möglich ist, so wird in einen Dunkelmodus umgeschaltet, bei dem bevorzugt lediglich der erste Wärmetauscher aktiviert ist. Unter aktiviert wird hierbei verstanden, dass das jeweilige Wärmeträgermedium durch den jeweiligen Wärmetauscher geführt wird.

Grundsätzlich ist auch ein partielles Umschalten zwischen den Betriebsmodi vorgesehen. Hierunter wird verstanden, dass der Wärmeübertrag vom jeweiligen Wärmeträgermedium in das Kältemittel beispielsweise durch die Menge des durch den jeweiligen Wärmetauscher strömenden Wärmeträgermediums eingestellt, beispielsweise reduziert wird. Die Anteile der in das Kältemittel über die beiden Wärmeträgermedien eingebrachten Wärme werden daher hierdurch variiert.

Insgesamt wir dadurch also ein - auch partielles - Umschalten zwischen den Wärmequellen vorgenommen. Damit sind insbesondere auch spezielle Anforderungen im Hinblick auf einen Sommer/Winterbetrieb einstellbar. Insbesondere besteht die Möglichkeit, bei Sonneneinstrahlung verstärkt oder vollständig auf das solarerwärmte Wärmeträgermedium umzuschalten.

Ein Ausführungsbeispiel der Erfindung ist in den Figuren dargestellt. Diese zeigen in schematischen Darstellungen:
- Fig 1: ein Schaltbild einer Wärmepumpe sowie
- Fig. 2: ein Schaltbild einer Wärmepumpenanlage.

In den Figuren sind gleichwirkende Teile mit den gleichen Bezugszeichen versehen.

Die in den Figuren dargestellte Wärmepumpe 1 weist einen als ersten Wärmetauscher ausgebildeten Verdampfer 2, einen Verdichter 4, einen Verflüssiger 6 sowie neben einigen weiteren Komponenten eine Drossel (Expansionsventil) 8 auf. Diese Komponenten sind in einen Kältemittelkreislauf 10 geschaltet, in dem ein Kältemittel K in an sich bekannter Weise geführt wird. Der Verdampfer 2 ist im Ausführungsbeispiel ein Luft-Kältemittel-Wärmetauscher und wird mit Luft, beispielsweise Umgebungsluft als erstes Wärmeträgermedium M1 beaufschlagt.

In diesem Gesamt-Kältemittelkreislauf 10 ist ergänzend ein zweiter Wärmetauscher 12 eingebunden, welcher im Ausführungsbeispiel als Flüssigkeits-Kältemittel-Wärmetauscher ausgebildet ist und an einen Solarkreislauf 14 angeschlossen ist. In diesem Solarkreislauf 14 wird als zweites Wärmeträgermedium M2 eine solarerwärmte Flüssigkeit geführt. Dieser zweite Wärmetauscher 12 ist im Ausführungsbeispiel über ein (Mehrwege-)Ventil/einen Verteiler 16 in den Kreislauf 10 integriert. Über das Mehrwegeventil 16 besteht die Möglichkeit, für einen Abtauzykluss das Kältemittel K in umgekehrter Fließrichtung durch den Verdampfer 2 zu führen. Im Normalbetrieb der Wärmepumpe 1 ist das Mehrwegeventil 16 derart geschaltet, dass einerseits die Positionen 1 und 4 und andererseits die Positionen 2 und 3 miteinander strömungstechnisch verbunden sind. Im Abtauzyklus sind die Positionen 1 und 2 sowie 3 und 4 miteinander verbunden.

Der Verflüssiger 6 ist an einem Sekundärkreislauf 20 angeschlossen, über den ein Verbraucher 22, insbesondere ein Energiespeicher, mit Wärme versorgt wird.

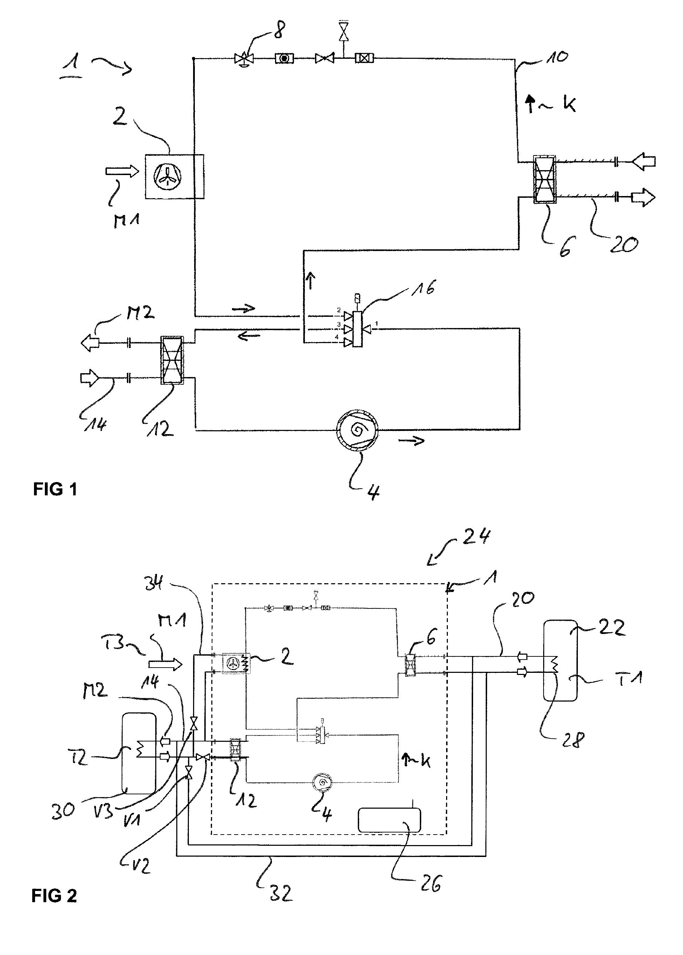

Die in Fig 1 dargestellte Wärmepumpe 1 ist Teil einer Wärmepumpenanlage 24, wie sie in Fig 2 beispielhaft dargestellt ist. Die Wärmepumpe 1 ist dabei über definierte Schnittstellen in die Wärmepumpenanlage 24 integriert. Diese Schnittstellen sind dabei üblicherweise durch Anschlussflansche für Strömungsleitungen gebildet. Die Wärmepumpe 1 ist in der Fig 2 durch die gestrichelte Linie dargestellt. Diese stellt insoweit schematisch ein Gehäuse der Wärmepumpe 1 dar. Innerhalb der Wärmepumpe ist im Ausführungsbeispiel eine Steuereinrichtung 26 integriert, über die der Betrieb der Wärmepumpe 1 sowie insgesamt der Wärmepumpenanlage 24 gesteuert wird.

Der Verbraucher 22 ist üblicherweise ein Pufferspeicher, aus dem die Wärme für Brauchwasser und / oder für eine Heizung entnommen wird. Der Wärmeaustausch zwischen dem Sekundärkreislauf 20 und dem Verbraucher 22 erfolgt über einen Wärmetauscher 28.

Der zweite Wärmetauscher 12 ist über den Solarkreislauf 14 an eine Wärmeerzeugungsanlage, insbesondere eine Solaranlage 30 (Solarkollektoren) angeschlossen, über die das im Solarkreislauf 14 geführte zweite Medium M2 (Sole) erwärmt wird. An den Solarkreislauf 14 ist einerseits ein Heizkreislauf 32 sowie andererseits ein Abtaukreislauf 34 angeschlossen. In jedem der Kreisläufe 14, 32, 34 ist jeweils ein Ventil V1, V2, V3 geschaltet, über die die einzelnen Kreisläufe 14, 32, 34 zu - oder abschaltbar oder bei Bedarf auch im Hinblick auf die Durchflussmenge regulierbar sind.

Der erste Wärmetauscher (2) ist - bei der in Fig. 2 dargestellten Ausführungsvariante - in den Abtaukreislauf 32 eingebunden. Hierzu ist er insbesondere als ein 3-Medien-Wärmetauscher ausgebildet, bei dem die Medien in unterschiedlichen, voneinander durch Wärmetauscherflächen getrennten Teilbereichen geführt sind. Im Ausführungsbeispiel ist der erste Wärmetauscher 2 als ein Luft-Sole-Kältemittel-Wärmetauscher ausgebildet.

Die einzelnen Ventile V1, V2, V3 sind über die Steuereinrichtung 26 ansteuerbar. Weiterhin erhält die Steuereinrichtung 26 über hier nicht näher dargestellte Sensoren, insbesondere Temperatursensoren Informationen beispielsweise über die Außentemperatur, über die Temperatur des Wassers im Verbraucher 22, im Folgenden als Verbrauchertemperatur T1 bezeichnet, über die Temperatur des ersten Wärmeträgermediums M1, im Folgenden als Lufttemperatur T3 bezeichnet, sowie über die Temperatur des zweiten Wärmeträgermediums M2, im Folgenden als Solartemperatur T2 bezeichnet. Anhand dieser Informationen über die Umgebungstemperaturen sowie über Betriebsparameter wird über die Steuereinrichtung 26 die Wärmepumpenanlage 24 in unterschiedlichen Betriebsmodi betrieben. Die Steuereinrichtung 26 ermittelt dabei auch eine aktuelle Solltemperatur für den Verbraucher 22.

In einem Grundmodus wird die Wärmepumpe 1 im normalen WärmepumpenBetrieb betrieben, d.h. das Kältemittel K wird im in Fig 1 dargestellten Kreislauf 10 geführt. Gleichzeitig wird in diesem Grundmodus über den zweiten Wärmetauscher 12 das Kältemittel K zusätzlich erwärmt. Über den Verflüssiger 6 wird die über die Wärmepumpe 1 bereitgestellte Wärme an den Sekundärkreislauf 20 und damit an den Verbraucher 22 abgegeben.

Dieser Grundmodus wird insbesondere dann eingestellt, wenn die Verbrauchertemperatur T1, also die Temperatur des im Pufferspeichers 22 zu erwärmenden Wassers im Bereich des Wärmetauschers 28 größer gleich der Solartemperatur T2 des zweiten Wärmeträgermediums M2 ist. Dies ist der Fall, wenn beispielsweise die von der Solaranlage 30 erzeugte Wärme nicht mehr für eine (weitere) Temperaturerhöhung im Pufferspeicher 22 ausreicht. Diese "minderwertige" solare Energie wird im Grundmodus daher für die zusätzliche Erwärmung des Kältemittels K herangezogen, um somit eine Effizienzsteigerung der gesamten Wärmepumpenanlage (Erhöhung des sogenannten COP, Coefficient of performance) zu erreichen.

Der zweite Wärmetauscher 12 ist jedoch nur dann im Betrieb, wenn die Solartemperatur T2 größer der Lufttemperatur T3 des ersten Wärmeträgermediums M1 ist. Hierdurch wird sichergestellt, dass das zweite Wärmeträgermedium M2 tatsächlich zur zusätzlichen Erwärmung des Kältemittels K beiträgt.

Je nach Temperatur T2, T3 der beiden Wärmeträgermedien M1, M2, also in Abhängigkeit der über diese bereitgestellten Wärme erfolgt in weiteren Betriebsmodi ein auch partielles Umschalten zwischen den beiden ersten und zweiten Wärmetauschern 2, 12 bis hin zu einem Abschalten des einen oder anderen Wärmetauschers 2, 12. Unter Zu- bzw. Abschalten eines Wärmetauscher 2, 12 wird hierbei verstanden, dass er mit dem jeweiligen Wärmeträgermedium M1, M2 beaufschlagt bzw. nicht beaufschlagt wird. Im Falle des in den Figuren dargestellten Luft-Kältemittel-Wärmetauschers 2 wird daher der üblicherweise vorgesehene Ventilator für die Erzeugung eines Luftstroms durch den Wärmetauscher 2 ab bzw. zugeschaltet. Im Falle eines Flüssigkeits-Kältemittel-Wärmetauschers, wie er im Ausführungsbeispiel als zweiter Wärmetauscher 12 dargestellt ist, erfolgt dies durch Zu- bzw. Abschalten einer hier nicht näher dargestellten Umwälzpumpe in den jeweiligen Kreislauf, hier im Solarkreislauf 14 oder durch Betätigen eines entsprechenden Steuer- oder Absperrventils.

Wird das Kältemittel K lediglich über den ersten Wärmetauscher 2 erwärmt (zweiter Wärmetauscher 12 ist abgeschaltet) befindet sich die Wärmepumpe 1 im sogenannten Dunkelmodus. Dies betrifft insbesondere den Fall, wenn die Solartemperatur T2 kleiner der Lufttemperatur T3 ist, beispielsweise wenn keine solare Energie erzeugt wird.

Umgekehrt, wenn eine ausreichende Menge an solarer Wärme über die Solaranlage 30 erzeugt wird, wird der erste Wärmetauscher 2 abgeschaltet und das Kältemittel K wird ausschließlich über das zweite Wärmeträgermedium M2 erwärmt. Dies wird als Solarmodus bezeichnet. Die Wärmepumpe wird daher ausschließlich mit dem zweiten Wärmetauscher (12) als Verdampfer für das Kältemittel K betrieben.

Dies ist beispielsweise der Fall bei mäßiger Sonneneinstrahlung, bei der die Solartemperatur T2 höher ist als die Lufttemperatur T3 der Umgebungsluft, gleichzeitig jedoch noch nicht ausreichend hoch ist, um alleine über das zweite Wärmeträgermedium M2 den Verbraucher 22 zu erwärmen. Die Situation tritt beispielsweise an kalten, sonnigen Wintertagen auf.

Wird schließlich über das zweite Wärmeträgermedium M2 ausreichend Energie zur Verfügung gestellt, insbesondere wenn die Solartemperatur T2 (deutlich) größer als die Verbrauchertemperatur T1 ist, so bedarf es keiner zusätzlichen Unterstützung durch die Wärmepumpe 1 und es wird in einen sogenannten Heizmodus umgeschaltet, bei der die Wärmepumpe 1 komplett außer Betrieb genommen wird und der Verbraucher ausschließlich solar erwärmt wird. In diesem Fall wird das entsprechende Ventil V1 des Heizkreislaufs 32 geöffnet und der Verdichter 4 sowie alle weiteren elektrischen Komponenten der Wärmepumpe 1 abgeschaltet.

Schließlich ist noch ein Abtaumodus vorgesehen, bei dem der erste Wärmetauscher 2 abgetaut wird. Hierzu wird das dem Abtaukreislauf 34 zugeordnete Ventil V3 geöffnet, so dass durch den ersten Wärmetauscher 2 direkt das zweite Wärmeträgermedium M2 geführt wird. Während des Abtaumodus kann prinzipiell die Wärmepumpe 1, also insbesondere der Betrieb des Verdichters 4 fortgesetzt werden. Bei dieser Ausführungsvariante mit dem Abtaumodus ist ein Umschalten des Mehrwegeventils 16 in den Abtauzyklus nicht erforderlich.

Insgesamt ist durch die hier beschriebene Wärmepumpenanlage 24 für die unterschiedlichsten Umgebungsbedingungen und -anforderungen eine Anlage zur Erzeugung von Wärme mit hoher Energieeffizienz für einen Verbraucher 22 erzielt. Bei einem nur minderwertigen solaren Energieeintrag wird dabei das zweite Wärmeträgermedium M2 über den zweiten Wärmetauscher 12 zur Erwärmung des Kältemittels K geführt.

## Patentansprüche

1. Wärmepumpenanlage (24) umfassend eine Wärmepumpe (1) mit einem in einem Kreislauf (10) geführten Kältemittel (K), die einen als Verdampfer (2) ausgebildeten ersten Wärmetauscher für ein erstes Wärmeträgermedium (M1) und einen Verflüssiger (6) zum Anschluss an einen Verbraucher (22) aufweist sowie weiterhin umfassend eine Steuereinrichtung (26) zur Steuerung der Wärmepumpe (1),
**dadurch gekennzeichnet,**
**dass** zusätzlich zu dem ersten Wärmetauscher (2) ein zweiter Wärmetauscher (12) für ein zweites Wärmeträgermedium (M2) zur Erwärmung des Kältemittels (K) vorgesehen ist.

2. Wärmepumpenanlage (24) nach Anspruch 1,
**dadurch gekennzeichnet,**
**dass** der zweite Wärmetauscher (12) an einer regenerativen Wärmequelle (30) angeschlossen ist.

3. Wärmepumpenanlage (24) nach Anspruch 2,
**dadurch gekennzeichnet,**
**dass** die von der regenerative Wärmequelle (30) bereitgestellte Wärme bevorzugt Solarwärme oder auch Erdwärme oder Ab-/Restwärme ist.

4. Wärmepumpenanlage (24) nach einem der vorhergehenden Ansprüche,
**dadurch gekennzeichnet,**
**dass** die Wärmequelle für das erste Wärmeträgermedium (M1) Luft, Wasser oder Erdwärme ist und das zweite Wärmeträgermedium (M2) solar erwärmt wird.

5. Wärmepumpenanlage (24) nach Anspruch 1,
**dadurch gekennzeichnet,**
**dass** das zweite Wärmeträgermedium (M2) dem Verbraucher (22) direkt zuführbar ist.

6. Wärmepumpenanlage (24) nach einem der vorhergehenden Ansprüche,
**dadurch gekennzeichnet,**
**dass** die Steuereinrichtung (26) derart eingerichtet ist, dass in Abhängigkeit der Temperatur (T2) des zweiten Wärmeträgermediums (M2) dieses in einem Heizmodus zur direkten Erwärmung des Verbrauchers (22) verwendet wird und in einem Grundmodus durch den zweiten Wärmetauscher (12) geleitet wird.

7. Wärmepumpenanlage (24) nach Anspruch 6,
**dadurch gekennzeichnet,**
**dass** die Steuereinrichtung (26) derart ausgebildet ist, dass eine Umschaltung vom Heizmodus in den Grundmodus dann erfolgt, wenn die Wärme des zweiten Wärmeträgermediums (M2) für eine Erwärmung des Verbrauchers (22) nicht mehr ausreicht und umgekehrt.

8. Wärmepumpenanlage (24) nach einem der vorhergehenden Ansprüche,
**gekennzeichnet durch**
einen Solarmodus, bei dem der erste Wärmetauscher (2) abgeschaltet und lediglich der zweite Wärmetauscher (12) aktiviert ist und den Verdampfer bildet.

9. Wärmepumpenanlage (24) nach einem der vorhergehenden Ansprüche,
**dadurch gekennzeichnet,**
**dass** der erste Wärmetauscher (2) in einem Abtaumodus mit dem zweiten Wärmeträgermedium (M2) beaufschlagbar ist.

10. Wärmepumpenanlage (24) nach einem der vorhergehenden Ansprüche,
**dadurch gekennzeichnet,**
**dass** das erste und das zweite Wärmeträgermedium (M1, M2) verschieden sind und/oder von unterschiedlichen Wärmequellen (30) erwärmt werden.

11. Wärmepumpenanlage (24) nach einem der vorhergehenden Ansprüche,
**dadurch gekennzeichnet,**
**dass** die Steuereinrichtung (26) derart ausgebildet ist, dass in Abhängigkeit des jeweils aktuellen Energieinhalts der Wärmeträgermedien (M1, M2) und in Abhängigkeit der aktuellen Anforderungen des Verbrauchers (22) wahlweise ein Grundmodus, ein Dunkelmodus oder ein Solarmodus eingestellt wird, wobei im Grundmodus beide Wärmetauscher (2, 12) aktiviert sind, im Dunkelmodus lediglich der erste Wärmetauscher (2) und im Solarmodus lediglich der zweite Wärmetauscher (12) aktiviert ist.

12. Verfahren zum Betrieb einer Wärmepumpenanlage (24) mit einer Wärmepumpe (1), bei der ein Kältemittel (K) in einem Kreislauf (10) geführt wird und die einen als Verdampfer (2) ausgebildeten ersten Wärmetauscher für ein erstes Wärmeträgermedium (M1) zur Erwärmung des Kältemittels (K) und einen Verflüssiger (6) zum Anschluss an einen Verbraucher (22) aufweist
**dadurch gekennzeichnet,**
**dass** zusätzlich zu dem ersten Wärmetauscher (2) ein zweiter Wärmetauscher (12) für ein zweites Wärmeträgermedium (M2) zur zusätzlichen Erwärmung des Kältemittels (K) vorgesehen ist.

13. Verfahren nach Anspruch 12
**dadurch gekennzeichnet,**
**dass** in Abhängigkeit der Temperatur (T2) des zweiten Wärmeträgermediums (M2) dieses in einem Heizmodus zur direkten Erwärmung des Verbrauchers (22) diesem zugeführt wird und in einem Grundmodus durch den zweiten Wärmetauscher (12) geleitet wird.

14. Verfahren nach Anspruch 12oder 13
**dadurch gekennzeichnet,**
**dass** während eines Abtaumodus das zweite Wärmeträgermedium (M2) dem ersten Wärmetauscher (2) direkt zugeführt wird.

15. Verfahren nach einem der Ansprüche 12 bis 14
**dadurch gekennzeichnet,**
**dass** die Wärmepumpe (1) in verschiedenen Betriebsmodi betreibbar ist, wobei in Abhängigkeit des jeweils aktuellen Energieinhalts der Wärmeträgermedien (M1, M2) und in Abhängigkeit der aktuellen Anforderungen des Verbrauchers (22) in einem Grundmodus beide Wärmetauscher (2, 12) parallel, in einem Dunkelmodus nur der erste Wärmetauscher (2) und in einem Regenerativmodus nur der zweite Wärmetauscher (12) aktiviert ist.
